(19) Europäisches Patentamt
European Patent Office
Office européen des brevets

(11) Veröffentlichungsnummer: **0 227 640 B1**

(12) **EUROPÄISCHE PATENTSCHRIFT**

(45) Veröffentlichungstag der Patentschrift: **26.05.93**

(51) Int. Cl.$^5$: **C08K 5/34**, C08L 23/02

(21) Anmeldenummer: **87100798.5**

(22) Anmeldetag: **26.09.83**

(60) Veröffentlichungsnummer der früheren Anmeldung nach Art. 76 EPÜ: **0 107 615**

(54) **Mit Bis-(polyalkylpiperidinyl-amino)-1,3,5-triazinen stabilisierte Polyolefine.**

(30) Priorität: **30.09.82 CH 5756/82**

(43) Veröffentlichungstag der Anmeldung: **01.07.87 Patentblatt 87/27**

(45) Bekanntmachung des Hinweises auf die Patenterteilung: **26.05.93 Patentblatt 93/21**

(84) Benannte Vertragsstaaten: **DE FR GB IT NL**

(56) Entgegenhaltungen: **DE-C- 2 319 816**

(73) Patentinhaber: **CIBA-GEIGY AG**
**Klybeckstrasse 141**
**CH-4002 Basel(CH)**

(72) Erfinder: **Rody, Jean, Dr.**
**Rütiring 82**
**CH-4125 Riehen(CH)**
Erfinder: **Gugumus, François, Dr.**
**Burgfeldermattweg 17**
**CH-4123 Allschwil(CH)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Stabilisierung von Polyolefinen gegen den lichtinduzierten und oxidativen Abbau durch Zugabe einer zur Verhinderung des Abbaus ausreichenden Menge eines bestimmten Bis-(polyalkylpiperidinyl-tert.-amino)-1,3,5-triazins.

In der DE 23 19 816 ist bereits die Stabilisierung von synthetischen Polymeren durch Zugabe von Mono-, Bis- und Tris-(polyalkylpiperidinyl-amino)-1,3,5-triazinen beschrieben, wobei es sich bei "-amino-" um sekundäres und tertiäres Amino handelt.

Es hat sich nun gezeigt, dass analoge Bis-(polyalkylpiperidinyl-amino)-1,3,5-triazine, bei denen sekundäres durch tertiäres Amino ersetzt wird, eine überraschend bessere Stabilisierung von Polyolefinen gewährleisten.

Die vorliegende Erfindung betrifft demnach Polyolefine, die als Stabilisator eine Verbindung der Formel I

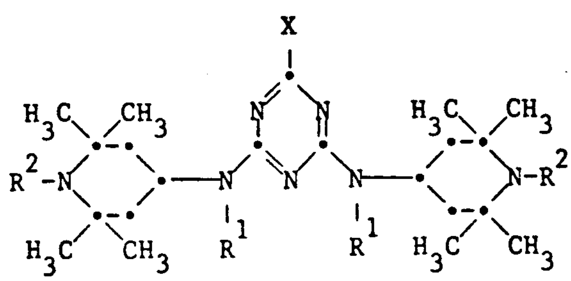

(I)

enthalten, worin X eine Gruppe

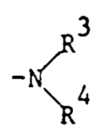

,

$-OR^5$ oder $-SR^5$ ist,

$R^1$ $C_1-C_{18}$ Alkyl, $C_5-C_{12}$ Cycloalkyl, $C_7-C_{11}$ Aralkyl, durch $-O-$ oder $-N(R^6)-$ unterbrochenes $C_3-C_{12}$ Alkyl, $C_2-C_6$ Carboxyalkyl, $C_3-C_{12}$-Alkoxycarbonylalkyl, eine Gruppe $-A-O-Q$, worin A Methylen, Ethylen oder Trimethylen und Q ein-, zwei- oder dreimal durch $C_1-C_4$ Alkyl substituiertes oder unsubstituiertes Phenyl sind, oder eine Gruppe der Formel

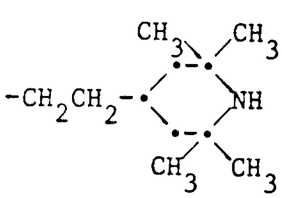

bedeutet,

$R^2$ Wasserstoff, $C_1-C_4$ Alkyl, Benzyl, Allyl, Acetyl, Acryloyl, Oxyl oder eine Gruppe $-CH_2-CH(R^7)OH$,



oder $-CH_2CN$ ist,

$R^3$ und $R^4$ unabhängig voneinander $C_1-C_{18}$ Alkyl, $C_5-C_{12}$ Cycloalkyl, $C_7-C_{11}$ Aralkyl, durch $-O-$ oder $-N(R^6)-$ unterbrochenes $C_3-C_{12}$ Alkyl, $C_2-C_4$ Hydroxyalkyl, $C_3-C_{15}$ Acyloxyalkyl, $C_2-C_6$ Carboxyalkyl, $C_3-C_{12}$ Alkoxycarbonylalkyl bedeuten und $R^4$ zusätzlich Wasserstoff sein kann oder $R^3$ und $R^4$ zusammen mit dem N-Atom, an das sie gebunden sind, einen heterocyclischen Ring bilden,

$R^5$ $C_1-C_{18}$ Alkyl, $C_3-C_{12}$Alkenyl, $C_5-C_{12}$-Cycloalkyl, $C_7-C_{11}$ Aralkyl oder durch $-O-$ oder $-N(R^6)$ unterbrochenes $C_3-C_{12}$ Alkyl ist,

$R^6$ $C_1-C_4$ Alkyl und $R^7$ Methyl, Ethyl, Phenyl oder Wasserstoff, letzteres nur, sofern X nicht $-SR^5$ ist, bedeuten;

wobei für den Fall, dass $R^1$ $C_1-C_{18}$-Alkyl oder $C_7-C_{11}$ Aralkyl bedeutet, $R^2$ nicht für Wasserstoff, $C_1-C_4$Alkyl, Benzyl, Allyl, Oxyl und nicht für $-CH_2-CH(R^7)OH$ mit den Bedeutungen $R^7$ = Wasserstoff, Methyl oder Phenyl steht, $R^3$ und $R^4$ nicht für $C_1-C_{18}$Alkyl, $C_5-C_{12}$Cycloalkyl und $C_7-C_{11}$ Aralkyl stehen, $R^4$ nicht für Wasserstoff steht und ferner $R^3$ und $R^4$ zusammen mit dem N-Atom, an das sie gebunden sind, keinen heterocyclischen Ring bilden und $R^5$ nicht für $C_1-C_{18}$Alkyl, $C_5-C_{12}$Cycloalkyl und $C_7-C_{11}$Aralkyl steht, oder enthaltend
2-Dipropylamino-4,6-bis-(2,2,6,6-tetramethyl-4-piperidyl-butylamino)-1,3,5-triazin,
2-Dimethylamino-4,6-bis-(2,2,6,6-tetramethyl-4-piperidyl-methylamino)-1,3,5-triazin,
2-Dimethylamino-4,6-bis-(1,2,2,6,6-pentamethyl-4-piperidyl-methylamino)-1,3,5-triazin,
2-Dimethylamino-4,6-bis-(2,2,6,6-tetramethyl-4-piperidyl-ethylamino)-1,3,5-triazin,
2-Dimethylamino-4,6-bis-(2,2,6,6-tetramethyl-4-piperidyl-isopropylamino)-1,3,5-triazin,
2-Dimethylamino-4,6-bis-(2,2,6,6-tetramethyl-4-piperidyl-butylamino)-1,3,5-triazin,
2-Dimethylamino-4,6-bis-(2,2,6,6-tetramethyl-4-piperidyl-octylamino)-1,3,5-triazin,
2-Diethylamino-4,6-bis-(2,2,6,6-tetramethyl-4-piperidyl-methylamino)-1,3,5-triazin,
2-Diethylamino-4,6-bis-(2,2,6,6-tetramethyl-4-piperidyl-ethylamino)-1,3,5-triazin,
2-Diethylamino-4,6-bis-(2,2,6,6-tetramethyl-4-piperidyl-isopropylamino)-1,3,5-triazin,
2-Diethylamino-4,6-bis-(2,2,6,6-tetramethyl-4-piperidyl-butylamino)-1,3,5-triazin,
2-Diethylamino-4,6-bis-(2,2,6,6-tetramethyl-4-piperidyl-octylamino)-1,3,5-triazin,
2-Dipropylamino-4,6-bis-(2,2,6,6-tetramethyl-4-piperidyl-methylamino)-1,3,5-triazin,
2-Dipropylamino-4,6-bis-(2,2,6,6-tetramethyl-4-piperidyl-ethylamino)-1,3,5-triazin,
2-Dipropylamino-4,6-bis-(2,2,6,6-tetramethyl-4-piperidyl-isopropylamino)-1,3,5-triazin,
2-Diisopropylamino-4,6-bis-(2,2,6,6-tetramethyl-4-piperidyl-methylamino)-1,3,5-triazin,
2-Diisopropylamino-4,6-bis-(2,2,6,6-tetramethyl-4-piperidyl-butylamino)-1,3,5-triazin,
2-Dibutylamino-4,6-bis-(2,2,6,6-tetramethyl-4-piperidyl-methylamino)-1,3,5-triazin,
2-Dibutylamino-4,6-bis-(2,2,6,6-tetramethyl-4-piperidyl-ethylamino)-1,3,5-triazin,
2-Dibutylamino-4,6-bis-(2,2,6,6-tetramethyl-4-piperidyl-isopropylamino)-1,3,5-triazin,
2-Dibutylamino-4,6-bis-(2,2,6,6-tetramethyl-4-piperidyl-butylamino)-1,3,5-triazin,
2-Dibutylamino-4,6-bis-(1-cyanmethyl-2,2,6,6-tetramethyl-4-piperidyl-butyl-amino)-1,3,5-triazin,
2-Dioctylamino-4,6-bis-(2,2,6,6-tetramethyl-4-piperidyl-methylamino)-1,3,5,-triazin,
2-Dioctylamino-4,6-bis-(2,2,6,6-tetramethyl-4-piperidyl-ethylamino)-1,3,5-triazin,
2-Isopropoxy-4,6-bis-(2,2,6,6-tetramethyl-4-piperidyl-butylamino)-1,3,5-triazin,
2-Isopropoxy-4,6-bis-(1-cyanmethyl-2,2,6,6-tetramethyl-4-piperidyl-butyl-amino)-1,3,5-triazin.
2-Butoxy-4,6-bis-(2,2,6,6-tetramethyl-4-piperidyl-methylamino)-1,3,5,-triazin,
2-Butoxy-4,6-bis-(2,2,6,6-tetramethyl-4-piperidyl-butylamino)-1,3,5-triazin,
2-Octyloxy-4,6-bis-(2,2,6,6-tetramethyl-4-piperidyl-methylamino)-1,3,5-triazin oder oder
2-Octyloxy-4,6-bis-(2,2,6,6-tetramethyl-4-piperidyl-butylamino)-1,3,5-triazin.

Bedeuten etwaige Substituenten Alkyl, so handelt es sich um geradkettige oder verzweigte Alkylgruppen. Bedeuten sie $C_1-C_4$ Alkyl, dann handelt es sich z.B. um Methyl, Ethyl, n-Propyl, Isopropyl, n-Butyl, sec.-Butyl oder tert.-Butyl. Bedeuten sie $C_1-C_{18}$ Alkyl, so kommen zusätzlich z.B. n-Pentyl, 2,2-Dimethyl-propyl, n-Hexyl, 2,3-Dimethyl-butyl, n-Octyl, 1,1,3,3-Tetramethylbutyl, n-Nonyl, Decyl, Dodecyl, Tetradecyl, Hexadecyl, Heptadecyl oder Octadecyl in Frage.

Bedeuten etwaige Substituenten $C_5-C_{12}$ Cycloalkyl, so handelt es sich beispielsweise um Cyclopentyl, Cyclohexyl, Cyclooctyl, Cyclodecyl, Cyclododecyl. Bevorzugt ist Cyclohexyl.

Bedeuten etwaige Substituenten $C_7-C_{11}$ Aralkyl, so handelt es sich zum Beispiel um Phenalkyl oder Naphthalkyl, wobei der Alkylteil bei Phenalkyl jeweils aus verzweigtem oder unverzweigtem $C_1-C_4$ Alkyl besteht. Bevorzugte Phenalkylreste sind α,α-Dimethylbenzyl, 1-Phenylethyl, 2-Phenylethyl und Benzyl. Beispiele für Naphthylalkylreste sind 1-Naphthylmethyl und 2-Naphthylmethyl. Bevorzugt ist Benzyl.

Als $C_2-C_4$ Hydroxyalkyl können $R^3$ und $R^4$ z.B. 2-Hydroxyethyl, 3-Hydroxypropyl oder 4-Hydroxybutyl sein. Bevorzugt ist 2-Hydroxyethyl.

Bedeutet $R^5$ $C_3-C_{12}$ Alkenyl, so stellt es beispielsweise Allyl, Methallyl, 2-Butenyl, 2-Pentenyl, 2-Hexenyl, 2-Octenyl oder 2-Dodecenyl dar. Bevorzugt ist Allyl.

$R^3$ bedeutet als $C_3-C_{15}$ Acyloxyalkyl z.B. Acetyloxymethyl, Acetyloxyethyl, Acetyloxypropyl, Propionyloxymethyl, Propionyloxyethyl, Butyroyloxyethyl, Hexanoyloxyethyl, Lauroyloxyethyl oder Lauroyloxypropyl.

Beispiele für durch -O- oder $-N(R^6)-$ unterbrochenes $C_3-C_{12}$ Alkyl sind 2-Methoxyethyl-, 2-Ethoxyethyl, 2-n-Propoxyethyl, 2-Isopropoxyethyl, 3-Methoxypropyl, 3-Ethoxypropyl, 4-Methoxybutyl, 6-Ethoxyhexyl, 10-Ethoxydecyl, 2-Dimethylaminoethyl, 2-Diethylaminoethyl, 3-Dimethylaminopropyl, 3-Diethylaminopropyl, 3-Di-isopropylamino-propyl, 3-Di-n-butylaminopropyl.

Beispiele für die Gruppe -A-O-Q sind
2-(4-Methyl-phenoxy)ethyl, 3-(4-Methyl-phenoxy)propyl, 3-(4-tert.-Butyl-phenoxy)propyl, 3-(2,4,6-Trimethyl-phenoxy)propyl, 3-(2,4-Di-tert.-butyl-phenoxy)propyl, (2,4,6-trimethyl-phenoxy)methyl.

Bedeuten $R_1$, $R_3$ oder $R_4$ $C_2-C_6$ Carboxyalkyl, so handelt es sich z.B. um Carboxymethyl, Carboxyethyl, Carboxypropyl, Carboxybutyl, Carboxypentyl.

Bedeuten $R_1$, $R_3$ oder $R_4$ $C_3-C_{12}$ Alkoxycarbonylalkyl, dann handelt es sich beispielsweise um Methoxycarbonylmethyl, Ethoxycarbonylmethyl, Propoxycarbonylmethyl, Butoxycarbonylmethyl, Octyloxycarbonylmethyl, Decyloxycarbonylmethyl, Methoxycarbonylethyl, Ethoxycarbonylethyl, Propoxycarbonylethyl, Butoxycarbonylethyl, Methoxycarbonylpropyl, Ethoxycarbonylpropyl, Methoxycarbonylbutyl, Ethoxycarbonylbutyl.

Bedeuten $R_3$ und $R_4$ zusammen mit dem N-Atom, an das sie gebunden sind, einen heterocyclischen Ring, dann handelt es sich z.B. um einen durch bis zu fünf Methyl- oder Ethylgruppen substituierten oder unsubstituierten Pyrrolidin-, Oxazolidin-, Piperidin-, Morpholin-, Piperazin-oder Hexamethyleniminring. Bevorzugt sind diese Ringsysteme unsubstituiert.

Von besonderem Interesse sind Polyolefine enthaltend eine Verbindung der Formel I, worin

X eine Gruppe

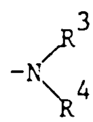

oder $-OR^5$ ist,

$R^1$ Cyclohexyl

$R^2$ Wasserstoff, $C_1-C_4$ Alkyl, Benzyl, Allyl, $C_2-C_3$ Hydroxyalkyl,

$R^3$ und $R^4$ unabhängig voneinander $C_1-C_{18}$ Alkyl, Cyclohexyl, Benzyl, $C_2-C_3$ Hydroxyalkyl und $R^4$ zusätzlich auch Wasserstoff und

$R^5$ $C_1-C_{12}$ Alkyl, $C_3-C_4$ Alkenyl, Cyclohexyl oder Benzyl bedeuten.

Weitere bevorzugate Ausführungsformen gehen aus den Patentansprüchen hervor.

Erfindungsgemäss einzusetzende Verbindungen der Formel I, worin $R^1$ $C_4-C_{18}$ Alkyl, insbesondere n-Butyl, bedeutet sind bevorzugt.

Die Herstellung der erfindungsgemäss als Stabilisatoren einzusetzenden Verbindungen erfolgt in Analogie zu an sich bekannten Verfahren, wie sie z.B. in der DE-OS 23 19 816 beschrieben sind. Die Ausgangsprodukte sind bekannt.

Beispiele für erfindungsgemäss mit Verbindungen der Formel I zu stabilisierende Polyolefine sind:

1. Polymere von Mono- und Diolefinen, beispielsweise Polyäthylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z.B. von Cyclopenten oder Norbornen. Polyäthylen von hoher oder niedriger Dichte und Polypropylen werden bevorzugt.

2. Mischungen der unter 1) genannten Polymeren, z.B. Mischungen von Polypropylen mit Polyäthylen oder mit Polyisobutylen.

3. Copolymere von Mono- und Diolefinen untereinander oder mit anderen Vinylmonomeren, wie z.B. Aethylen-Propylen-Copolymere, Propylen-Buten-1-Copolymere, Propylen-Isobutylen-Copolymere, Aethylen-Buten-1-Copolymere, Propylen-Butadien-Copolymere, Isobutylen-Isopren-Copolymere, Aethylen-Alkylacrylat-Copolymere, Aethylen-Alkylmethacrylat-Copolymere, Aethylen-Vinylacetat-Copolymere oder Aethylen-Acrylsäure-Copolymere und deren Salze (Ionomere), sowie Terpolymere von Aethylen mit Propylen und einem Dien, wie Hexadien, Dicyclopentadien oder Aethylidennorbornen.

Die Stabilisatoren werden den Kunststoffen in einer Konzentration von 0,01 bis 5 Gew.-%, berechnet auf das zu stabilisierende Material, zugesetzt. Vorzugsweise werden 0,03 bis 1,5, besonders bevorzugt 0,2 bis 0,6 Gew.-% der Verbindungen, berechnet auf das zu stabilisierende Material, in dieses eingearbeitet.

Die Einarbeitung kann nach der Polymerisation erfolgen, beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels.

Die Erfindung betrifft daher auch die durch Zusatz von 0,01 bis 5 Gew.-% einer Verbindung der Formel I stabilisierten Kunststoffe, die gegebenenfalls noch andere bekannte und übliche Zusätze enthalten können. Die so stabilisierten Kunststoffe können in verschiedenster Form angewendet werden,z.B. als Folien, Fasern, Bändchen oder Profile.

Als weitere Additive, mit denen zusammen die erfindungsgemäss verwendbaren Stabilisatoren eingesetzt werden können, sind beispielsweise zu nennen:

1. Antioxidantien

1.1. Alkylierte Monophenole

2,6-Di-tert.-butyl-4-methylphenol
2-tert.-Butyl-4,6-dimethylphenol
2,6-Di-tert.-butyl-4-äthylphenol
2,6-Di-tert.-butyl-4-n-butylphenol
2,6-Di-tert.-butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.-butyl-4-methoxymethylphenol

1.2. Alkylierte Hydrochinone

2,6-Di-tert.-butyl-4-methoxyphenol
2,5-Di-tert.-butyl-hydrochinon
2,5-Di-tert.-amyl-hydrochinon
2,6-Diphenyl-4-octadecyloxyphenol

1.3. Hydroxylierte Thiodiphenyläther

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-äthylphenol)
2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Aethyliden-bis-(4,6-di-tert.butylphenol)
2,2'-Aethyliden-bis-(6-tert.butyl-4-isobutylphenol)
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Aethylenglycol-bis-[3,3-bis-(3'-tert.butyl-4'-hydroxyphenyl)-butyrat] Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5. Benzylverbindungen.

1,3,5 – Tri – (3,5 – di – tert.butyl – 4 – hydroxybenzyl) – 2,4,6 – trimethylbenzol
Di – (3,5 – di – tert.butyl – 4 – hydroxybenzyl) – sulfid
3,5 – di – tert.butyl – 4 – hydroxybenzyl – mercaptoessigsäure – isooctylester
Bis – (4 – tert.butyl – 3 – hydroxy – 2,6 – dimethylbenzyl)dithiol – terephthalat
1,3,5 – Tris – (3,5 – di – tert.butyl – 4 – hydroxybenzyl) – isocyanurat
1,3,5 – Tris – (4 – tert.butyl – 3 – hydroxy – 2,6 – diemthylbenzyl) – isocyanurat
3,5 – Di – tert.butyl – 4 – hydroxybenzyl – phosphonsäure – dioctadecylester
3,5 – Di – tert.butyl – 4 – hydroxybenzyl – phosphonsäure – monoäthylester, Calcium – salz.

1.6. Acylaminophenole

4 – Hydroxy – laurinsäureanilid
4 – Hydroxy – stearinsäureanilid
2,4 – Bis – octylmercapto – 6 – (3,5 – di – tert.butyl – 4 – hydroxyanilino) – s – triazin

1.7. Ester der $\beta$ – (3,5 – Di – tert.butyl – 4 – hydroxyphenyl) – propionsäure mit ein – oder mehrwertigen Alkoholen, wie z.B. mit

| | |
|---|---|
| Methanol | Diäthylenglycol |
| Octadecanol | Triäthylenglycol |
| 1,6 – Hexandiol | Pentaerythrit |
| Neopentylglycol | Tris – hydroxyäthyl – isocyanurat |
| Thiodiäthylenglycol | Di – hydroxyäthyl – oxalsäurediamid |

1.8. Ester der $\beta$(5 – tert.butyl – 4 – hydroxy – 3 – methylphenyl) – propionsäure mit ein – oder mehrwertigen Alkoholen, wie z.B. mit

| | |
|---|---|
| Methanol | Diäthylenglycol |
| Octadecanol | Triäthylenglycol |
| 1,6 – Hexandiol | Pentaerythrit |
| Neopentylglycol | Tris – hydroxyäthyl – isocyanurat |
| Thiodiäthylenglycol | Di – hydroxyäthyl – oxalsäurediamid |

1.9. Amide der $\beta$ – (3,5 – Di – tert.butyl – 4 – hydroxyphenyl) – propionsäure, wie z.B.

N,N′ – Di – (3,5 – di – tert.butyl – 4 – hydroxyphenylpropionyl) – hexamethylendiamin
N,N′ – Di – (3,5 – di – tert.butyl – 4 – hydroxyphenylpropionyl) – trimethylendiamin
N,N′ – Di – (3,5 – di – tert.butyl – 4 – hydroxyphenylpropionyl) – hydrazin

2. UV – Absorber und Lichtschutzmittel

2.1. 2 – (2′ – Hydroxyphenyl) – benztriazole, wie z.B. das 5′ – Methyl – , 3′,5′ – Di – tert.butyl – , 5′ – Tert.butyl – , 5′ – (1,1,3,3 – Tetramethylbutyl) – , 5 – Chlor – 3′,5′ – di – tert.butyl – , 5 – Chlor – 3′ – tert.butyl – 5′ – methyl – , 3′ – sec.Butyl – 5′ – tert.butyl – , 4′ – Octoxy – , 3′,5′ – Di – tert.amyl – Derivat.

2.2. 2 – Hydroxybenzophenone, wie z.B. das 4 – Hydroxy – , 4 – Methoxy – , 4 – Octoxy – , 4 – Decyloxy – , 4 – Dodecyloxy – , 4 – Benzyloxy – , 4,2′,4′ – Trihydroxy – , 2′ – Hydroxy – 4,4′ – dimethoxy – Derivat.

2.3. Ester von gegebenenfalls substituierten Benzoesäuren, wie z.B. 4 – Tert.butyl – phenylsalicylat, Phenylsalicylat, Octylphenylsalicylat, Dibenzoylresorcin, Bis – (4 – tert.butylbenzoyl) – resorcin, Benzoyl – resorcin, 3,5 – Di – tert.butyl – 4 – hydroxybenzoesäure – 2,4 – di – tert.butylphenylester.

2.4. Acrylate, wie z.B. $\alpha$ – Cyan – $\beta$,$\beta$ – diphenylacrylsäure – äthylester bzw. – isooctylester, $\alpha$ – Carbomethoxy – zimtsäuremethylester, $\alpha$ – Cyano – $\beta$ – methyl – p – methoxy – zimtsäuremethylester bzw. – butylester. $\alpha$ – Carbomethoxy – p – methoxy – zimtsäure – methylester.
N – ($\beta$ – Carbomethoxy – $\beta$ – cyanovinyl) – 2 – methyl – indolin.

2.5. Nickelverbindungen, wie z.B. Nickelkomplexe des 2,2′ – Thio – bis – [4 – (1,1,3,3 – tetramethylbutyl) – phenols], wie der 1:1 – oder der 1:2 – Komplex, gegebenenfalls mit zusätzlichen Liganden wie n – Butylamin, Triäthanolamin oder N – Cyclohexyl – diäthanolamin, Nickeldibutyldithiocarbamat, Nickelsalze von 4 – Hydroxy – 3,5 – di – tert.butylbenzyl – phosphonsäure – monoalkylestern wie vom Methyl – oder Aethylester, Nickelkomplexe von Ketoximen wie von 2 – Hydroxy – 4 – methyl – phenyl – undecylketonoxim, Nickelkomplexe des 1 – Phenyl – 4 – lauroyl – 5 – hydroxy – pyrazols, gegebenenfalls mit zusätzlichen Liganden.

2.6. Sterisch gehinderte Amine, wie z.B. Bis – (2,2,6,6 – tetramethylpiperidyl) – sebacat
Bis – (1,2,2,6,6 – pentamethylpiperidyl) – sebacat
n – Butyl – 3,5 – di – tert.butyl – 4 – hydroxybenzyl – malonsäure – bis(1,2,2,6,6 – pentamethylpiperidyl) – ester, Kondensationsprodukt aus 1 – Hydroxyäthyl – 2,2,6,6 – Tetramethyl – 4 – hydroxypiperidin und Bernsteinsäure, Kondensationsprodukt aus N,N′ – (2,2,6,6 – Tetramethylpiperidyl) – hexamethylendiamin und 4 – tert.octylamino – 2,6 – dichlor – 1,3,5 – s – triazin. Tris – (2,2,6,6 – tetramethylpiperidyl) – nitrilotri – acetat.

2.7. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′-di-tert.butyl-oxanilid, 2-Aethoxy-2′-äthyl-oxanilid, N,N′-Bis-(3-di-methylaminopropyl)-oxalamid, 2-Aethoxy-5-tert.butyl-2′-äthyl-oxanilid und dessen Gemisch mit 2-Aethoxy-2′-äthyl-5,4′-di-tert.butyl-oxanilid, Gemische von ortho- und para-Methoxy- sowie von o- und p-Aethoxy-di-substituierte Oxaniliden.

3. Metalldesaktivatoren, wie z.B. N,N′-Diphenyloxalsäurediamid, N-Salicylal-N′-salicyloylhydrazin, N,N′-Bis-salicyloylhydrazin, N,N′-Bis-(3,5-di-tert.butyl-4-hydroxyphenylpropionyl)-hydrazin, 3-Salicyloylamino-1,2,4-triazol, Bis-benzyliden-oxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert. butylphenyl)-4,4′-biphenylen-diphosphonit.

5. Peroxidzerstörende Verbindungen, wie z.B. Ester der β-Thio-di-propionsäure, beispielsweise der Lauryl-, Stearyl-, Myristyl-oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die Herstellung und Verwendung der erfindungsgemäss einzusetzenden Verbindungen wird in den folgenden Beispielen näher erläutert. Teile sind dabei Gewichtsteile.

Beispiel 1: 53,6 g 2-Chlor-4,6-bis(2,2,6,6-tetramethyl-4-piperidylbutylamino)-1,3,5-triazin werden mit 15,0 g Dipropylamin in 250 ml Xylol 16 Stunden unter Rückfluss gerührt. Nach dem Abkühlen auf Raumtemperatur gibt man 100 ml 2-n. Natronlauge hinzu, rührt kräftig während 15 Minuten und trennt dann die wässrige Phase ab. Die Xylollösung wird über Natriumsulfat getrocknet und im Vakuum eingedampft. Durch Kristallisation des erhaltenen Rückstandes aus Acetonitril erhält man das 2-Dipropylamino-4,6-bis-(2,2,6,6-tetramethyl-4-piperidyl-butylamino)-1,3,5-triazin mit Schmp. 95 - 96 °C.

Beispiele 2 - 30: Verfährt man in Analogie zu dem in Beispiel 1 beschriebenen Verfahren, so erhält man die in der nachfolgenden Tabelle I angegebenen Verbindungen.

Tabelle I

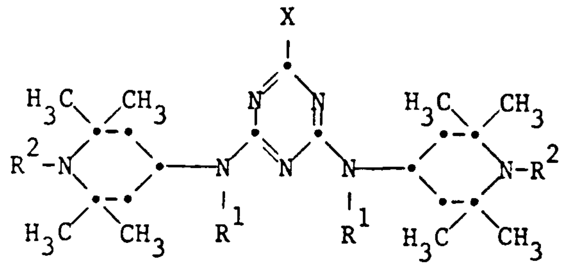

| Beispiel Nr. | X | $R^1$ | $R^2$ | Phys. Eig. |
|---|---|---|---|---|
| 2 | $-N(CH_3)_2$ | $-CH_3$ | -H | F. 139-140°C |
| 3 | $-N(CH_3)_2$ | $-CH_3$ | $-CH_3$ | F. 186°C |
| 4 | $-N(CH_3)_2$ | $-C_2H_5$ | -H | F. 121°C |
| 5 | $-N(CH_3)_2$ | $-CH(CH_3)_2$ | -H | F. 160-161°C |
| 6 | $-N(CH_3)_2$ | $-C_4H_9$ | -H | F. 108-110°C |
| 7 | $-N(CH_3)_2$ | $-C_8H_{17}$ | -H | F. 95-96°C |
| 8 | $-N(C_2H_5)_2$ | $-CH_3$ | -H | F. 107-108°C |
| 9 | $-N(C_2H_5)_2$ | $-C_2H_5$ | -H | F. 191-192°C |

Tabelle I Fortsetzung

| Beispiel Nr. | X | $R^1$ | $R^2$ | Phys. Eig. |
|---|---|---|---|---|
| 10 | $-N(C_2H_5)_2$ | $-CH(CH_3)_2$ | -H | F. 248°C |
| 11 | $-N(C_2H_5)_2$ | $-C_4H_9$ | -H | F. 45°C |
| 12 | $-N(C_2H_5)_2$ | $-C_8H_{17}$ | -H | F. 83-84°C |
| 13 | $-N(C_3H_7)_2$ | $-CH_3$ | -H | F. 121-122°C |
| 14 | $-N(C_3H_7)_2$ | $-C_2H_5$ | -H | F. 145-146°C |
| 15 | $-N(C_3H_7)_2$ | $-CH(CH_3)_2$ | -H | F. 224° |
| 16 | $-N[CH(CH_3)_2]_2$ | $-CH_3$ | -H | F. 181-182° |
| 17 | $-N[CH(CH_3)_2]_2$ | $-C_4H_9$ | -H | F. 156°C |
| 18 | $-N(C_4H_9)_2$ | $-CH_3$ | -H | Harz |
| 19 | $-N(C_4H_9)_2$ | $-C_2H_5$ | -H | Harz |
| 20 | $-N(C_4H_9)_2$ | $-CH(CH_3)_2$ | -H | F. 130° |
| 21 | $-N(C_4H_9)_2$ | $-C_4H_9$ | -H | Harz |
| 22 | $-N(C_4H_9)_2$ | $-C_4H_9$ | $-CH_2-CN$ | F. 170-171° |
| 23 | $-N(C_8H_{17})_2$ | $-CH_3$ | -H | Oel |
| 24 | $-N(C_8H_{17})_2$ | $-C_2H_5$ | -H | F. ~30° |
| 25 | $-OCH(CH_3)_2$ | $-C_4H_9$ | -H | F. 85° |
| 26 | $-OCH(CH_3)_2$ | $-C_4H_9$ | $-CH_2-CN$ | F. 214-215° |
| 27 | $-OC_4H_9$ | $-CH_3$ | -H | Harz |
| 28 | $-OC_4H_9$ | $-C_4H_9$ | -H | Harz |
| 29 | $-OC_8H_{17}$ | $-CH_3$ | -H | Harz |
| 30 | $-OC_8H_{17}$ | $-C_4H_9$ | -H | Harz |

Beispiel 31: Lichtschutzwirkung in PP-Bändchen

1000 Teile Polypropylenpulver (Schmelzindex 1,5 g/10 Min. (230 °C, 2160 g)) werden in einem Trommelmischer mit 0,05 Teilen Pentaerythrityl-tetrakis[β-(3,5-di-tert.-butyl-4-hydroxyphenyl)-propionat], 0,05 Teilen Tris-(2,4-di-tert.-butylphenyl)-phosphit und 0,05 Teilen eines Lichtschutzmittels der Formel I (vgl. nachfolgende Tabelle) gemischt und anschliessend in einem Extruder bei einer Temperatur von 180 - 220 °C granuliert.

Das erhaltene Granulat wird in einem zweiten Extruder mit Breitschlitzdüse (Temperatur 220 - 260 °C) zu einer Folie verarbeitet, die in Bändchen geschnitten wird, welche anschliessend bei erhöhter Temperatur im Verhältnis von 1:6 verstreckt und aufgewickelt werden (Titer der Bändchen: 780-1000 dtex; Reissfestigkeit: 60 - 71 cN/tex).

Die so hergestellten Polypropylenbändchen werden spannungslos auf Probenträger aufgebracht und im Xenotestapparat 1200 belichtet. Nach verschiedenen Zeiten werden je 5 Prüflinge entnommen und

ihre Reissfestigkeit bestimmt. Als Mass für die Schutzwirkung der einzelnen Lichtschutzmittel gilt die Belichtungszeit, nach der die Reissfestigkeit der Bändchen auf 50 % des Ausgangswertes zurückgegangen ist. Die erhaltenen Werte sind in Tabelle II aufgeführt.

Tabelle II: Lichtschutzwirkung in PP-Bändchen

| Lichtschutzmittel | Stunden Belichtung bis 50 % Reissfestigkeit |
|---|---|
| Keines | 500 |
| 0,05 % Verbindung aus Beispiel Nr. 1 | 1520 |
| 0,05 % Verbindung aus Beispiel Nr. 2 | 2000 |
| 0,05 % Verbindung aus Beispiel Nr. 4 | 1680 |
| 0,05 % Verbindung aus Beispiel Nr. 6 | 1960 |
| 0,05 % Verbindung aus Beispiel Nr. 8 | 1720 |
| 0,05 % Verbindung aus Beispiel Nr. 9 | 1600 |
| 0,05 % Verbindung aus Beispiel Nr.14 | 1720 |

Beispiel 32: Löslichkeit und Verträglichkeit in Hochdruck-polyethylen-Folien

100 Teile Polyethylengranulat niederer Dichte (= 0,917) werden mit 1 Teil eines Stabilisators der folgenden Tabelle im Brabanderplastographen bei 180 °C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer handhydraulischen Laborpresse während 6 Minuten bei 170 °C und 12 Tonnen Druck zu einer 0,5 mm dicken Folie gepresst, die unverzüglich in kaltem Wasser abgeschreckt wird. Aus dieser 0,5 mm Folie werden nun Abschnitte von je 60 x 44 $mm^2$ gestanzt und in einem Umluftofen bei 60 °C gehängt. Zu regelmässigen Zeitabständen werden diese Prüflinge aus dem Ofen entnommen und visuell auf Ausblüherscheinungen kontrolliert. Als Mass der Verträglichkeit gilt die Zeit bis zur Beobachtung von deutlichem Ausblühen.

Die Ergebnisse sind in der Tabelle III zusammengefasst.

Tabelle III:

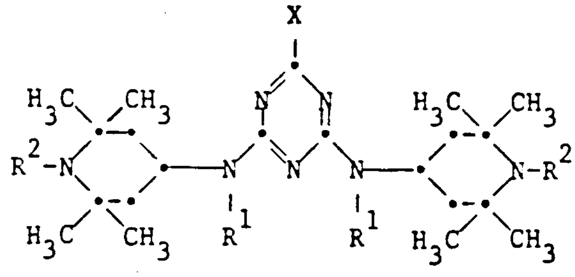

| X | $R_1$ | $R_2$ | Beisp.Nr. | Tage bis zum deutlichen Ausblühen bei 60°C |
|---|---|---|---|---|
| $-N(CH_3)_2$ | $CH_3$ | H | 2 | gelöst 79 |
| $-N(CH_3)_2$ | $CH_3$ | $CH_3$ | 3 | gelöst $>$ 79 |
| $-N(C_2H_5)_2$ | $CH_3$ | H | 8 | gelöst 79 |
| $-OCH(CH_3)_2$ | $C_4H_9$ | H | 28 | gelöst $>$ 79 |

**Patentansprüche**

**1.** Polyolefine enthaltend als Stabilisator gegen lichtinduzierten und oxidativen Abbau eine Verbindung der Formel I

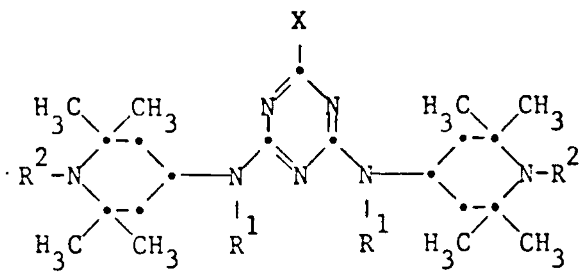

(I)

worin X eine Gruppe

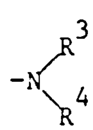

,

$-OR^5$ oder $-SR^5$ ist,

$R^1$ $C_1-C_{18}$ Alkyl, $C_5-C_{12}$ Cycloalkyl, $C_7-C_{11}$ Aralkyl, durch $-O-$ oder $-N(R^6)-$ unterbrochenes $C_3-C_{12}$ Alkyl, $C_2-C_6$ Carboxyalkyl, $C_3-C_{12}$ $-$Alkoxycarbonylalkyl, eine Gruppe $-A-O-Q$, worin A Methylen, Ethylen oder Trimethylen und Q ein$-$, zwei$-$ oder dreimal durch $C_1-C_4$ Alkyl substituiertes oder unsubstituiertes Phenyl

sind, oder eine Gruppe der Formel

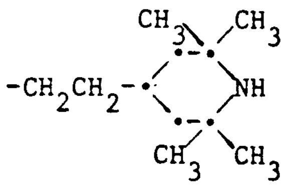

bedeutet,

$R^2$ Wasserstoff, $C_1-C_4$ Alkyl, Benzyl, Allyl, Acetyl, Acryloyl, Oxyl oder eine Gruppe $-CH_2-CH(R^7)OH$,

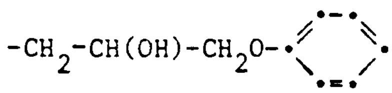

oder $-CH_2CN$ ist,

$R^3$ und $R^4$ unabhängig voneinander $C_1-C_{18}$ Alkyl, $C_5-C_{12}$ Cycloalkyl, $C_7-C_{11}$ Aralkyl, durch $-O-$ oder $-N(R^6)-$ unterbrochenes $C_3-C_{12}$ Alkyl, $C_2-C_4$ Hydroxyalkyl, $C_3-C_{15}$ Acyloxyalkyl, $C_2-C_6$ Carboxyalkyl, $C_3-C_{12}$ Alkoxycarbonylalkyl bedeuten und $R^4$ zusätzlich Wasserstoff sein kann oder $R^3$ und $R^4$ zusammen mit dem N-Atom, an das sie gebunden sind, einen heterocyclischen Ring bilden,

$R^5$ $C_1-C_{18}$ Alkyl, $C_3-C_{12}$ Alkenyl, $C_5-C_{12}$ Cycloalkyl, $C_7-C_{11}$ Aralkyl, oder durch $-O-$ oder $-N(R^6)$ unterbrochenes $C_3-C_{12}$ Alkyl ist,

$R^6$ $C_1-C_4$ Alkyl und $R^7$ Methyl, Ethyl, Phenyl oder Wasserstoff, letzteres nur, sofern X nicht $-SR^5$ ist, bedeuten;

wobei für den Fall, dass $R^1$ $C_1-C_{18}$-Alkyl oder $C_7-C_{11}$Aralkyl bedeutet, $R^2$ nicht für Wasserstoff, $C_1-C_4$Alkyl, Benzyl, Allyl, Oxyl und nicht für $-CH_2-CH(R^7)OH$ mit den Bedeutungen $R^7$ = Wasserstoff, Methyl oder Phenyl steht, $R^3$ und $R^4$ nicht für
$C_1-C_{18}$Alkyl, $C_5-C_{12}$Cycloalkyl und $C_7-C_{11}$ Aralkyl stehen, $R^4$ nicht für Wasserstoff steht und ferner $R^3$ und $R^4$ zusammen mit dem N-Atom, an das sie gebunden sind, keinen heterocyclischen Ring bilden und $R^5$ nicht für $C_1-C_{18}$Alkyl, $C_5-C_{12}$Cycloalkyl und $C_7-C_{11}$ Aralkyl steht, oder enthaltend
2-Dipropylamino-4,6-bis-(2,2,6,6-tetramethyl-4-piperidyl-butylamino)-1,3,5-triazin,
2-Dimethylamino-4,6-bis-(2,2,6,6-tetramethyl-4-piperidyl-methylamino)-1,3,5-triazin,
2-Dimethylamino-4,6-bis-(1,2,2,6,6-pentamethyl-4-piperidyl-methylamino)-1,3,5-triazin,
2-Dimethylamino-4,6-bis-(2,2,6,6-tetramethyl-4-piperidyl-ethylamino)-1,3,5-triazin,
2-Dimethylamino-4,6-bis-(2,2,6,6-tetramethyl-4-piperidyl-isopropylamino)-1,3,5-triazin,
2-Dimethylamino-4,6-bis-(2,2,6,6-tetramethyl-4-piperidyl-butylamino)-1,3,5-triazin,
2-Dimethylamino-4,6-bis-(2,2,6,6-tetramethyl-4-piperidyl-octylamino)-1,3,5-triazin,
2-Diethylamino-4,6-bis-(2,2,6,6-tetramethyl-4-piperidyl-methylamino)-1,3,5-triazin,
2-Diethylamino-4,6-bis-(2,2,6,6-tetramethyl-4-piperidyl-ethylamino)-1,3,5-triazin,
2-Diethylamino-4,6-bis-(2,2,6,6-tetramethyl-4-piperidyl-isopropylamino)-1,3,5-triazin,
2-Diethylamino-4,6-bis-(2,2,6,6-tetramethyl-4-piperidyl-butylamino)-1,3,5-triazin,
2-Diethylamino-4,6-bis-(2,2,6,6-tetramethyl-4-piperidyl-octylamino)-1,3,5-triazin,
2-Dipropylamino-4,6-bis-(2,2,6,6-tetramethyl-4-piperidyl-methylamino)-1,3,5-triazin,
2-Dipropylamino-4,6-bis-(2,2,6,6-tetramethyl-4-piperidyl-ethylamino)-1,3,5-triazin,
2-Dipropylamino-4,6-bis-(2,2,6,6-tetramethyl-4-piperidyl-isopropylamino)-1,3,5-triazin,
2-Diisopropylamino-4,6-bis-(2,2,6,6-tetramethyl-4-piperidyl-methylamino)-1,3,5-triazin,
2-Diisopropylamino-4,6-bis-(2,2,6,6-tetramethyl-4-piperidyl-butylamino)-1,3,5-triazin,
2-Dibutylamino-4,6-bis-(2,2,6,6-tetramethyl-4-piperidyl-methylamino)-1,3,5-triazin,
2-Dibutylamino-4,6-bis-(2,2,6,6-tetramethyl-4-piperidyl-ethylamino)-1,3,5-triazin,
2-Dibutylamino-4,6-bis-(2,2,6,6-tetramethyl-4-piperidyl-isopropylamino)-1,3,5-triazin,
2-Dibutylamino-4,6-bis-(2,2,6,6-tetramethyl-4-piperidyl-butylamino)-1,3,5-triazin,
2-Dibutylamino-4,6-bis-(1-cyanmethyl-2,2,6,6-tetramethyl-4-piperidyl-butylamino)-1,3,5-triazin,

2 – Dioctylamino – 4,6 – bis – (2,2,6,6 – tetramethyl – 4 – piperidyl – methylamino) – 1,3,5 – triazin,
2 – Dioctylamino – 4,6 – bis – (2,2,6,6 – tetramethyl – 4 – piperidyl – ethylamino) – 1,3,5 – triazin,
2 – Isopropoxy – 4,6 – bis – (2,2,6,6 – tetramethyl – 4 – piperidyl – butylamino) – 1,3,5 – triazin,
2 – Isopropoxy – 4,6 – bis – (1 – cyanmethyl – 2,2,6,6 – tetramethyl – 4 – piperidyl – butylamino) – 1,3,5 – triazin,
2 – Butoxy – 4,6 – bis – (2,2,6,6 – tetramethyl – 4 – piperidyl – methylamino) – 1,3,5 – triazin,
2 – Butoxy – 4,6 – bis – (2,2,6,6 – tetramethyl – 4 – piperidyl – butylamino) – 1,3,5 – triazin,
2 – Octyloxy – 4,6 – bis – (2,2,6,6 – tetramethyl – 4 – piperidyl – methylamino) – 1,3,5 – triazin oder
2 – Octyloxy – 4,6 – bis – (2,2,6,6 – tetramethyl – 4 – piperidyl – butylamino) – 1,3,5 – triazin.

**2.** Polyolefine gemäss Anspruch 1, dadurch gekennzeichnet, dass sie eine Verbindung der Formel I enthalten, worin

X eine Gruppe

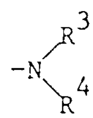

oder $-OR^5$ ist,

$R^1$ Cyclohexyl,

$R^2$ Wasserstoff, $C_1-C_4$ Alkyl, Benzyl, Allyl, $C_2-C_3$ Hydroxyalkyl,

$R^3$ und $R^4$ unabhängig voneinander $C_1-C_{18}$ Alkyl, Cyclohexyl, Benzyl, $C_2-C_3$ Hydroxyalkyl und $R^4$ zusätzlich auch Wasserstoff und

$R^5$ $C_1-C_{12}$ Alkyl, $C_3-C_4$ Alkenyl, Cyclohexyl oder Benzyl bedeuten.

**3.** Polyolefine gemäss Anspruch 1, dadurch gekennzeichnet, dass sie eine Verbindung der Formel I enthalten, worin $R^1$ $C_4-C_{18}$ Alkyl bedeutet.

**4.** Polyolefine gemäss Anspruch 1, dadurch gekennzeichnet, dass sie eine Verbindung der Formel I enthalten, worin $R^1$ n – Butyl ist.

**5.** Polyolefine gemäss Anspruch 1, dadurch gekennzeichnet, dass die Menge der Verbindung der Formel I im Bereich von 0,01 bis 5 Gewichts – %, bezogen auf das unbehandelte synthetische Polymere, liegt.

**6.** Polyolefine gemäss Anspruch 1, dadurch gekennzeichnet, dass das Polymere Polyethylen von hoher oder niedriger Dichte oder Polypropylen ist.

## Claims

**1.** A polyolefin containing, as the stabilizer against light – induced or oxidative degradation, a compound of the formula I

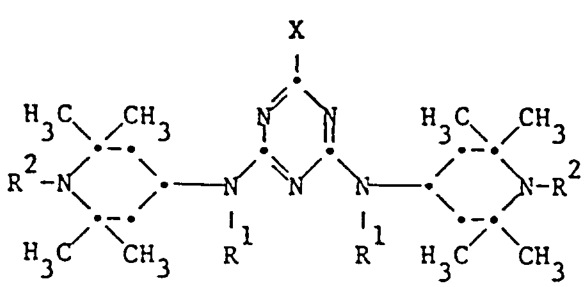

(I)

in which X is a group

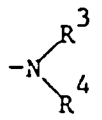
,

$-OR^5$ or $-SR^5$

$R_1$ is $C_1-C_{18}$alkyl, $C_5-C_{12}$cycloalkyl, $C_7-C_{11}$aralkyl, $C_3-C_{12}$alkyl which is interrupted by $-O-$ or $-N(R^6)-$, $C_2-C_6$carboxyalkyl or $C_3-C_{12}$alkoxycarbonylalkyl or is a group $-A-O-Q$ in which A is methylene, ethylene or trimethylene and Q is phenyl which is unsubstituted or monosubstituted, disubstituted or trisubstituted by $C_1-C_4$alkyl, or is a group of the formula

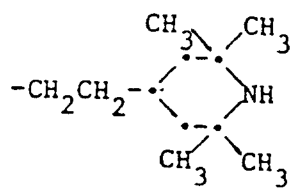

$R^2$ is hydrogen, $C_1-C_4$alkyl, benzyl, allyl, acetyl, acryloyl, (amine)oxide or a group $-CH_2-CH(R^7)OH$,

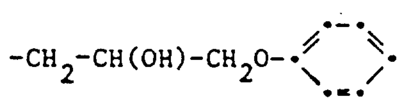

or $-CH_2CN$

$R^3$ and $R^4$ independently of one another are $C_1-C_{18}$alkyl, $C_5-C_{12}$cycloalkyl, $C_7-C_{11}$aralkyl or $C_3-C_{12}$alkyl which is interrupted by $-O-$ or $-N(R^6)-$, $C_2-C_4$hydroxyalkyl, $C_3-C_{15}$acyloxyalkyl, $C_2-C_6$carboxyalkyl or $C_3-C_{12}$alkoxycarbonylalkyl, and $R^4$ can additionally also be hydrogen, or $R^3$ and $R^4$, together with the N atom to which they are attached, form a heterocyclic ring, $R^5$ is $C_1-C_{18}$alkyl, $C_3-C_{12}$alkenyl, $C_5-C_{12}$cycloalkyl, $C_7-C_{11}$aralkyl or $C_3-C_{12}$alkyl which is interrupted by $-O-$ or $-N-(R^6)-$, $R^6$ is $C_1-C_4$alkyl and $R^7$ is methyl, ethyl, phenyl or hydrogen, the latter only if X is not $-SR^5$, where in the case of $R^1$ being $C_1-C_{18}$alkyl or $C_7-C^{11}$aralkyl, $R^2$ is not hydrogen, $C_1-C_4$alkyl, benzyl, allyl or (amine)oxide and is not $-CH_2-CH(R^7)OH$ in which $R^7$ is hydrogen methyl or phenyl, $R^3$ and $R^4$ are not $C_1-C_{18}$alkyl, $C_5-C_{12}$cycloalkyl and $C_7-C_{11}$aralkyl and $R^4$ is not hydrogen and additionally $R^3$ and $R^4$, together with the N atom to which they are attached, do not form a heterocyclic ring and $R^5$ is not $C_1-C_{18}$alkyl, $C_5-C_{12}$cycloalkyl or $C_7-C_{11}$aralkyl, or containing

2-dipropylamino-4,6-bis-(2,2,6,6-tetramethyl-4-piperidyl-butylamino)-1,3,5-triazine,
2-dimethylamino-4,6-bis-(2,2,6,6-tetramethyl-4-piperidyl-methylamino)-1,3,5-triazine,
2-dimethylamino-4,6-bis-(1,2,2,6,6-pentamethyl-4-piperidyl-methylamino)-1,3,5-triazine,
2-dimethylamino-4,6-bis-(2,2,6,6-tetramethyl-4-piperidyl-ethylamino)-1,3,5-triazine,
2-dimethylamino-4,6-bis-(2,2,6,6-tetramethyl-4-piperidylisopropylamino)-1,3,5-triazine,
2-dimethylamino-4,6-bis(2,2,6,6-tetramethyl-4-piperidyl-butylamino)-1,3,5-triazine,
2-dimethylamino-4,6-bis-(2,2,6,6-tetramethyl-4-piperidyl-octylamino)-1,3,5-triazine,
2-diethylamino-4,6-bis-(2,2,6,6-tetramethyl-4-piperidyl-methylamino)-1,3,5-triazine,
2-diethylamino-4,6-bis-(2,2,6,6-tetramethyl-4-piperidyl-ethylamino)-1,3,5-triazine,
2-diethylamino-4,6-bis-(2,2,6,6-tetramethyl-4-piperidyl-isopropylamino)-1,3,5-triazine,
2-diethylamino-4,6-bis-(2,2,6,6-tetramethyl-4-piperidyl-butylamino)-1,3,5-triazine,
2-diethylamino-4,6-bis-(2,2,6,6-tetramethyl-4-piperidyl-octylamino)-1,3,5-triazine,
2-dipropylamino-4,6-bis-(2,2,6,6-tetramethyl-4-piperidyl-methylamino)-1,3,5-triazine,
2-dipropylamino-4,6-bis-(2,2,6,6-tetramethyl-4-piperidyl-ethylamino)-1,3,5-triazine,
2-dipropylamino-4,6-bis-(2,2,6,6-tetramethyl-4-piperidyl-isopropylamino)-1,3,5-triazine,
2-diisopropylamino-4,6-bis-(2,2,6,6-tetramethyl-4-piperidyl-methylamino)-1,3,5-triazine,
2-diisopropylamino-4,6-bis-(2,2,6,6-tetramethyl-4-piperidyl-butylamino)-1,3,5-triazine,

2 – dibutylamino – 4,6 – bis – (2,2,6,6 – tetramethyl – 4 – piperidyl – methylamino) – 1,3,5 – triazine
2 – dibutylamino – 4,6 – bis – (2,2,6,6 – tetramethyl – 4 – piperidyl – ethylamino) – 1,3,5 – triazine
2 – dibutylamino – 4,6 – bis – (2,2,6,6 – tetramethyl – 4 – piperidyl – isopropylamino) – 1,3,5 – triazine
2 – dibutylamino – 4,6 – bis – (2,2,6,6 – tetramethyl – 4 – piperidyl – butylamino) – 1,3,5 – triazine
2 – dibutylamino – 4,6 – bis – (1 – cyanomethyl – 2,2,6,6 – tetramethyl – 4 – piperidyl – butylamino – 1,3,5 – triazine,
2 – dioctylamino – 4,6 – bis – (2,2,6,6 – tetramethyl – 4 – piperidylmethylamino)1,3,5 – triazine
2 – dioctylamino – 4,6 – bis(2,2,6,6 – tetramethyl – 4 – piperidyl – ethylamino) – 1,3,5 – triazine
2 – isopropoxy – 4,6 – bis – (2,2,6,6 – tetramethyl – 4 – piperidyl – butylamino) – 1,3,5 – triazine,
2 – isopropoxy – 4,6 – bis – (1 – cyanomethyl – 2,2,6,6 – tetramethyl – 4 – piperidyl – butylamino) – 1,3,5 – triazine,
2 – butoxy – 4,6 – bis – (2,2,6,6 – tetramethyl – 4 – piperidyl – methylamino) – 1,3,5 – triazine,
2 – butoxy – 4,6 – bis – (2,2,6,6 – tetramethyl – 4 – piperidyl – butylamino) – 1,3,5 – triazine,
2 – octyloxy – 4,6 – bis – (2,2,6,6 – tetramethyl – 4 – piperidyl – methylamino) – 1,3,5 – triazine or
2 – octyloxy – 4,6 – bis – (2,2,6,6 – tetramethyl – 4 – piperidyl – butylamino) – 1,3,5 – triazine

**2.** A polyolefin according to claim 1, which contains a compound of the formula I in which X is a group

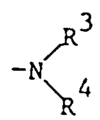

or $-OR^5$
$R^1$ is cyclohexyl, $R^2$ is hydrogen, $C_1-C_4$alkyl, benzyl, allyl or $C_2-C_3$hydroxyalkyl, $R^3$ and $R^4$ independently of one another are $C_1-C_{18}$alkyl, cyclohexyl, benzyl or $C_2-C_3$hydroxyalkyl and $R^4$ is additionally also hydrogen and $R^5$ is $C_1-C_{12}$alkyl, $C_3-C_4$alkenyl, cyclohexyl or benzyl.

**3.** A polyolefin according to claim 1, which contains a compound of the formula I in which $R^1$ is $C_4-C_{18}$alkyl.

**4.** A polyolefin according to claim 1, which contains a compound of the formula I in which $R^1$ is n – butyl.

**5.** A polyolefin according to claim 1, wherein the quantity of the compound of the formula I is within the range from 0.01 to 5 % by weight, based on the untreated synthetic polymer.

**6.** A polyolefin according to claim 1, the polymer being high – density or low – density polyethylene, or polypropylene.

## Revendications

**1.** Polyoléfines contenant comme stabilisant contre la dégradation provoquée par la lumière et la dégradation oxydante un composé répondant à la formule I

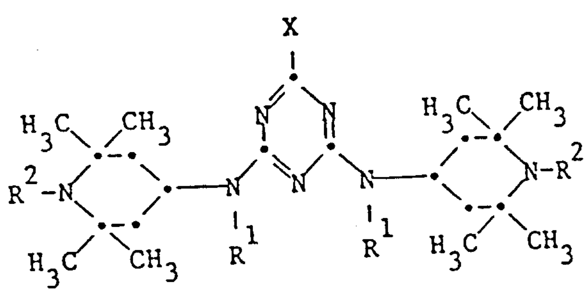

(I) .

dans laquelle X est un groupe

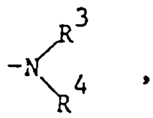

$-OR^5$ ou $-SR^5$ ,

$R^1$ désigne un groupe alkyle en $C_1-C_{18}$, cycloalkyle en $C_5-C_{12}$, aralkyle en $C_7-C_{11}$, alkyle en $C_3-C_{12}$ interrompu par $-O-$ ou $-N(R^6)-$, carboxyalkyle en $C_2-C_6$, (alcoxy en $C_3-C_{12}$)carbonylalkyle, un groupe $-A-O-Q$, dans lequel A désigne un groupe méthylène, éthylène ou triméthylène et Q un groupe phényle non substitué ou substitué une fois, deux fois ou trois fois par un groupe alkyle en $C_1-C_4$, ou un groupe répondant à la formule

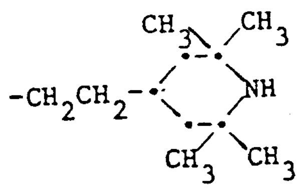

$R^2$ est un atome d'hydrogène, un groupe alkyle en $C_1-C_4$, benzyle, allyle, acétyle, acryloyle, oxyle ou un groupe
$-CH_2-CH(R^7)OH$,

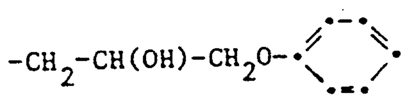

ou $-CH_2CN$ ,

$R^3$ et $R^4$ désignent indépendamment l'un de l'autre un groupe alkyle en $C_1-C_{18}$, cycloalkyle en $C_5-C_{12}$, aralkyle en $C_7-C_{11}$, alkyle en $C_3-C_{12}$ interrompu par $-O-$ ou $-N(R^6)-$, hydroxyalkyle en $C_2-C_4$, acyloxyalkyle en $C_3-C_{15}$, carboxyalkyle en $C_2-C_6$, alcoxycarbonyl-alkyle en $C_3-C_{12}$, et $R^4$ peut en outre être un atome d'hydrogène, ou forment avec l'atome d'azote auquel ils sont liés un cycle hétérocyclique,

$R^5$ désigne un groupe alkyle en $C_1-C_{18}$, alcényle en $C_3-C_{12}$, cycloalkyle en $C_5-C_{12}$, aralkyle en $C_7-C_{11}$ ou alkyle en $C_3-C_{12}$ interrompu par $-O-$ ou $-N(R^6)-$,

$R^6$ désigne un groupe alkyle en $C_1-C_4$ et $R^7$ un groupe méthyle, éthyle, phényle, ou un atome d'hydrogène, ce dernier uniquement dans la mesure où X n'est pas un groupe $-SR^5$, étant entendu que dans le cas où $R^1$ désigne un groupe alkyle $C_1-C_{18}$ ou aralkyle en $C_7-C_{11}$, $R^2$ ne représente pas un atome d'hydrogène, un groupe alkyle en $C_1-C_4$, benzyle, allyle, oxyle et ne représente pas le groupe $-CH_2-CH(R^7)OH$ dans lequel $R^7$ est un atome d'hydrogène, un groupe méthyle ou phényle, $R^3$ et $R^4$ ne représentent pas un groupe alkyle en $C_1-C_{18}$, cycloalkyle en $C_5-C_{12}$ et aralkyle en $C_7-C_{11}$, $R^4$ ne représente pas un atome d'hydrogène et en outre $R^3$ et $R^4$ ne forment pas de cycle hétérocyclique avec l'atome d'azote auquel ils sont liés, et $R^5$ ne représente pas un groupe alkyle en $C_1-C_{18}$, cycloalkyle en $C_5-C_{12}$ et aralkyle en

$C_7-C_{11}$, ou contenant de la
2-dipropylamino-4,6-bis-(2,2,6,6-tétraméthyl-4-pipéridyl-butylamino)-1,3,5-triazine,
2-diméthylamino-4,6-bis-(2,2,6,6-tétraméthyl-4-pipéridyl-méthylamino)-1,3,5-triazine,
2-diméthylamino-4,6-bis-(1,2,2,6,6-pentaméthyl-4-pipéridyl-méthylamino)-1,3,5-triazine,
2-diméthylamino-4,6-bis-(2,2,6,6-tétraméthyl-4-pipéridyl-éthylamino)-1,3,5 – triazine,
2 – diméthylamino – 4,6 – bis – (2,2,6,6 – tétraméthyl – 4 – pipéridyl – isopropylamino) – 1,3,5 – triazine,
2 – diméthylamino – 4,6 – bis – (2,2,6,6 – tétraméthyl – 4 – pipéridyl – butylamino) – 1,3,5 – triazine,
2 – diméthylamino – 4,6 – bis – (2,2,6,6 – tétraméthyl – 4 – pipéridyl – octylamino) – 1,3,5 – triazine,
2 – diéthylamino – 4,6 – bis – (2,2,6,6 – tétraméthyl – 4 – pipéridyl – méthylamino) – 1,3,5 – triazine,
2 – diéthylamino – 4,6 – bis – (2,2,6,6 – tétraméthyl – 4 – pipéridyl – éthylamino) – 1,3,5 – triazine,
2 – diéthylamino – 4,6 – bis – (2,2,6,6 – tétraméthyl – 4 – pipéridyl – isopropylamino) – 1,3,5 – triazine,
2 – diéthylamino – 4,6 – bis – (2,2,6,6 – tétraméthyl – 4 – pipéridyl – butylamino) – 1,3,5 – triazine,
2 – diéthylamino – 4,6 – bis – (2,2,6,6 – tétraméthyl – 4 – pipéridyl – octylamino) – 1,3,5 – triazine,
2 – dipropylamino – 4,6 – bis – (2,2,6,6 – tétraméthyl – 4 – pipéridyl – méthylamino) – 1,3,5 – triazine,
2 – dipropylamino – 4,6 – bis – (2,2,6,6 – tétraméthyl – 4 – pipéridyl – éthylamino) – 1,3,5 – triazine,
2 – dipropylamino – 4,6 – bis – (2,2,6,6 – tétraméthyl – 4 – pipéridyl – isopropylamino) – 1,3,5 – triazine,
2 – diisopropylamino – 4,6 – bis – (2,2,6,6 – tétraméthyl – 4 – pipéridyl – méthylamino) – 1,3,5 – triazine,
2 – diisopropylamino – 4,6 – bis – (2,2,6,6 – tétraméthyl – 4 – pipéridyl – butylamino) – 1,3,5 – triazine,
2 – dibutylamino – 4,6 – bis – (2,2,6,6 – tétraméthyl – 4 – pipéridyl – méthylamino) – 1,3,5 – triazine,
2 – dibutylamino – 4,6 – bis – (2,2,6,6 – tétraméthyl – 4 – pipéridyl – éthylamino) – 1,3,5 – triazine,
2 – dibutylamino – 4,6 – bis – (2,2,6,6 – tétraméthyl – 4 – pipéridyl – isopropylamino) – 1,3,5 – triazine,
2 – dibutylamino – 4,6 – bis – (2,2,6,6 – tétraméthyl – 4 – pipéridyl – butylamino) – 1,3,5 – triazine,
2 – dibutylamino – 4,6 – bis – (1 – cyanométhyl – 2,2,6,6 – tétraméthyl – 4 – pipéridyl – butylamino) – 1,3,5 – triazine,
2 – dioctylamino – 4,6 – bis – (2,2,6,6 – tétraméthyl – 4 – pipéridyl – méthylamino) – 1,3,5 – triazine,
2 – dioctylamino – 4,6 – bis – (2,2,6,6 – tétraméthyl – 4 – pipéridyl – butylamino) – 1,3,5 – triazine,
2 – isopropoxy – 4,6 – bis – (2,2,6,6 – tétraméthyl – 4 – pipéridyl – butylamino) – 1,3,5 – triazine,
2 – isopropoxy – 4,6 – bis – (1 – cyanométhyl – 2,2,6,6 – tétraméthyl – 4 – pipéridyl – butylamino) – 1,3,5 – triazine,
2 – butoxy – 4,6 – bis – (2,2,6,6 – tétraméthyl – 4 – pipéridyl – méthylamino) – 1,3,5 – triazine,
2 – butoxy – 4,6 – bis – (2,2,6,6 – tétraméthyl – 4 – pipéridyl – butylamino) – 1,3,5 – triazine,
2 – octyloxy – 4,6 – bis – (2,2,6,6 – tétraméthyl – 4 – pipéridyl – méthylamino) – 1,3,5 – triazine ou
2 – octyloxy – 4,6 – bis – (2,2,6,6 – tétraméthyl – 4 – pipéridyl – butylamino) – 1,3,5 – triazine.

**2.** Polyoléfines selon la revendication 1, caractérisées en ce qu'elles contiennent un composé répondant à la formule I, dans laquelle
X est un groupe

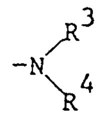

ou $-OR^5$,

$R^1$ est un groupe cyclohexyle,

$R^2$ est un atome d'hydrogène, un groupe alkyle en $C_1-C_4$, benzyle, allyle, hydroxyalkyle en $C_2-C_3$,

$R^3$ et $R^4$ sont indépendamment l'un de l'autre un groupe alkyle en $C_1-C_{18}$, cyclohexyle, benzyle, hydroxyalkyle en $C_2-C_3$, et $R^4$ désigne en outre aussi un atome d'hydrogène et

$R^5$ désigne un groupe alkyle en $C_1-C_{12}$, alcényle en $C_3-C_4$, cyclohexyle ou benzyle.

**3.** Polyoléfines selon la revendication 1, caractérisées en ce qu'elles contiennent un composé répondant à la formule I, dans laquelle $R^1$ désigne un groupe alkyle en $C_4-C_{18}$.

**4.** Polyoléfines selon la revendication 1, caractérisées en ce qu'elles contiennent un composé répondant à la formule I, dans laquelle $R^1$ désigne un groupe n-butyle.

**5.** Polyoléfines selon la revendication 1, caractérisées en ce que la quantité du composé répondant à la formule I est dans l'intervalle de 0,01 à 5 % en poids par rapport au polymère synthétique non traité.

**6.** Polyoléfines selon la revendication 1, caractérisées en ce que le polymère est le polyéthylène haute ou basse densité ou le polypropylène.